Europäisches Patentamt

European Patent Office

Office européen des brevets

(19)

(11) Publication number: **0 063 941 B2**

(12) # NEW EUROPEAN PATENT SPECIFICATION

(45) Date of publication of the new patent
specification : 02.05.91 Bulletin 91/18

(51) Int. Cl.⁵ : **F01P 3/20, F01P 3/18**

(21) Application number : 82302121.7

(22) Date of filing : 26.04.82

(54) Cooling system for an internal combustion engine.

(30) Priority : 25.04.81 JP 61920/81

(43) Date of publication of application :
03.11.82 Bulletin 82/44

(45) Publication of the grant of the patent :
14.08.85 Bulletin 85/33

(45) Mention of the opposition decision :
02.05.91 Bulletin 91/18

(84) Designated Contracting States :
CH DE FR GB LI NL SE

(56) References cited :
DE-A- 2 825 945
DE-A- 3 044 666
GB-A- 1 128 571
GB-A- 1 405 086
GB-A- 2 010 974

(56) References cited :
GB-A- 2 057 564
US-A- 3 439 657
Drawing : 1.50.1-83,09.00-33, Page 1 and page
2 of the Fa. MAK, produced 1977

(73) Proprietor : MITSUBISHI JUKOGYO
KABUSHIKI KAISHA
5-1, Marunouchi 2-chome Chiyoda-ku
Tokyo 100 (JP)

(72) Inventor : Yamada, Tsugutoshi
Mitsubishi Jukogyo K. K. 5-1, Marunouchi
2-chome
Chiyoda-ku, Tokyo (JP)
Inventor : Hasimoto, Akira
Mitsubishi Jukogyo K. K. 5-1, Marunouchi
2-chome
Chiyoda-ku, Tokyo (JP)

(74) Representative : Sommerville, John Henry et al
SOMMERVILLE & RUSHTON 11 Holywell Hill
St. Albans Hertfordshire, AL1 1EZ (GB)

EP 0 063 941 B2

## Description

The present invention relates to cooling systems specifically for marine internal combustion engines.

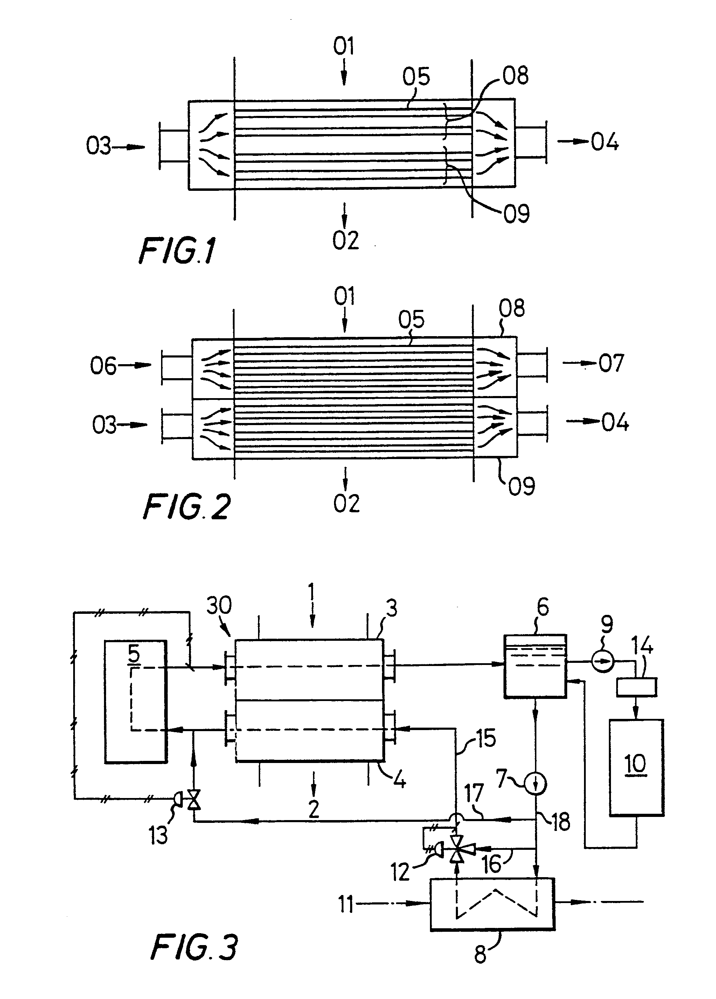

One known form of air cooler for a marine diesel engine is illustrated in Figure 1 of the accompanying drawings and comprises a high temperature air inlet port 01, a low temperature air outlet port 02, a coolant sea water inlet port 03, a coolant sea water outlet port 04, cooling pipes 05, a high temperature section 08, and a low temperature section 09. .

It has been common practice to cool an air cooler by means of sea water ; hence, there is a possibility that salt may separate out from the coolant sea water in the high temperature section 08. Because of this the coolant sea water temperature is permitted to rise at most up to about 50°C. In other words, although the quantity of waste heat dissipated in the sea water is relatively large, due to its relatively low temperature, the sea water cannot be utilized as a heat source in a ship, and therefore, it tends to be uselessly thrown away externally of the ship.

To meet this disadvantage, it has been proposed to utilize heated coolant as a heat source in a ship in the manner illustrated in Figure 2. Thus, as shown, the air cooler is divided into two, high temperature and low temperature sections 08 and 09 respectively, of which the low temperature section is for sea water cooling as described above, whilst the high temperature section 08, having inlet and outlet ports 06 and 07 respectively, is designed for water cooling. Thereby, the temperature on the side of the coolant fresh water outlet port 07 can be relatively high and therefore used for heat utilization. However, this prior art system has the disadvantage that it is made somewhat complex due to the need to install standby lines for use upon stoppage of the marine engine, or interruption of waste heat utilization, or other causes.

It is also known, from British Patent Application 2057564, to provide in a cooling system for a pressure-charged internal combustion engine not specifically intended for use in a marine application an air cooler which is divided into high and low temperature sections, each section being supplied with fresh water coolant. In this system, the air cooler is arranged to cool the compressed charge intake air for the engine and the heat absorbed by each of the air cooler sections is dissipated to ambient air through associated fan-assisted radiators.

A cooling water system for a marine internal combustion engine is known from the Company MAK. Thus, in their drawing No. 150.1-83.09.00-33, produced in 1977, there is shown a system which includes an air cooler divided into high and low temperature sections, each with respective coolant water inlet and outlet ports, and each being designed for fresh water cooling. The coolant water outlet port of the low temperature section of the air cooler is connected to the coolant water inlet port of a water jacket of the engine, whilst the coolant water inlet port of the high temperature section is connected to the coolant water outlet port of said water jacket. The system also includes a fresh water cooler for cooling said coolant water by heat exchange with sea water, a pump for circulating the coolant water and a water tank for storing the coolant water.

This system makes full use of fresh water for coolant purposes in a marine internal combustion engine. However there has been an increasing demand for saving energy on board ship and in addition to the waste heat from exhaust gas which has been collected and utilized heretofore, there is also a need to collect and utilize the waste heat of scavenged air and jacket coolant water as efficiently as possible.

It is a principal object of the present invention to provide a cooling system for a marine internal combustion engine generally of the kind known from the MAK drawing, in which the waste heat of scavenged air and jacket cooling water can be effectively collected and utilized.

According to the present invention, such a cooling system is characterised in that said water tank and said water cooler are so connected that said fresh water can pass from said water tank to said water cooler, and in that the coolant water outlet port of said high temperature section of said air cooler is connected to an inlet to said water tank whereby, in operation of the system, said coolant water is circulted by said pump from said water tank through said fresh water cooler for initial cooling, then to said low temperature section, said water jacket, and said high temperature section, in that order, so that they are cooled in series by the coolant water without further cooling of said coolant water, whereby the coolant water is returned to said water tank at a sufficiently high temperature for heat utilization, and in that heat utilization means are associated with the water tank.

Thus, in accordance with the invention, the component parts of the cooling system are connected in the order of an outlet temperature with the lowest one placed first as illustrated in the following :

```
 ┌──►Coolant Fresh Water ──►  Air Cooler Low  ──────►  Water
 │                              Temperature Section       jacket
 │                                                           │
 │        (Waste Heat      ◄───   Air Cooler High    ◄───────┘
 └────      Utilization]           Temperature Section
```

The cooling system of the invention enables the following advantages to be obtained :

1. fresh water is progressively raised in temperature as it passes through the cooling system and is collected at its highest temperature in the water tank for use as a heat source e.g. for a ship ; thereby the steam generated by an exhaust gas economizer can be saved, and electric power generated by a turbine-generator can be increased by the corresponding amount ;

2. a part of the coolant fresh water is reduced in temperature, and thereby the electric power required for a coolant water pump can be decreased ; and

3. by carrying out high temperature jacket cooling, exhaust gas temperature can be raised, and so, electric power generated by a turbine-generator can be increased.

An additional feature of the system resides in that a by-pass of coolant fresh water is provided for short-circuiting the air cooler low temperature section, and a control valve is provided in the by-pass for controlling the temperature of the coolant fresh water at the outlet port of the water jacket constant.

The above-mentioned, and other features and objects of the present invention will become more apparent by reference to the following description of one preferred embodiment of the invention, taken in conjunction with the accompanying drawings, in which :

Figures 1 and 2, respectively, are schematic views showing structures of known air coolers in the prior art, and.

Figure 3 is a schematic system diagram of a cooling system for a marine internal combustion engine according to said preferred embodiment of the present invention.

Referring now to Figure 3, the preferred cooling system comprises an air cooler 30 having an inlet port 1 for high temperature air, an outlet port 2 for low temperature air, a high temperature coolant section 3, and a low temperature coolant section 4. The system also includes a water jacket 5 of the engine, a tank 6 for coolant fresh water, a pump 7 for the coolant fresh water, and a fresh water cooler 8, provided between a delivery port of the pump 7 and an inlet port of the low temperature section 4 of the air cooler 30, for cooling the coolant fresh water by means of sea water fed through path 11. The system further includes a circulation pump 9 for circulating heated water from the tank 6 (for utilization of waste heat), to a group of heater equipments 10, and return to the tank. A control valve 12 for coolant fresh water temperature, is provided at the confluence of a fresh water path 15 on the inlet side of the low temperature section 4 of the air cooler 30, and a by-pass 16 connecting a fresh water path 18 on the delivery side of the water pump 7 to said fresh water path 15 on the inlet side of the low temperature section 4 of the air cooler 30, which by-pass short-circuits the water cooler 8, said control valve serving to regulate the temperature of the fresh water on the inlet side of the low temperature section 4. In addition, a control valve 13 is provided for setting the temperature of the coolant fresh water, which valve is located in a bypass 17, which connects the fresh water path 18 on the delivery side of the water pump 7 to the fresh water path on the inlet side of the water jacket 5 so as to short-circuit both the water cooler 8 and the low temperature section 4 of the air cooler 30, the control valve 13 serving to regulate the temperature of the fresh water on the outlet side of the jacket 5. It is to be noted that in Figure 3 reference numeral 14 designates a standby heater (of steam type).

In use the cooling system described above with reference to Figure 3 operates as follows :

Coolant fresh water is delivered from the water tank 6 with the aid of the water pump 7, and, after it has been regulated to an appropriate temperature by means of the control valve 12, it first cools the lower temperature section 4 of the air cooler 30, then cools the water jacket 5 of the engine, and subsequently cools the high temperature section 3 of the air cooler 30, as indicated by arrows.

By employing the above-described arrangement, waste heat from the scavenged air passing through the air cooler 30 and from the water jacket is jointly collected by the coolant fresh water, and thus the final temperature of the coolant fresh water can be raised up to a sufficiently high temperature (although the temperature is equal to or lower than the air temperature at the high temperature air inlet port 1).

This hot water is led to the coolant fresh water tank 6, from which it is circulated via the pump 9 to the various heater equipments 10, and the like in the ship as a heat source. The circulating water is subjected to heat exchange, and is thus lowered in temperature again, and is returned to the water tank 6 to be mixed with incoming high temperature coolant water, after which it is fed via the water pump to the fresh water cooler 8.

In the case of the above-described cooling system, the following advantages can be obtained :

1. By utilizing the heat of the coolant fresh water for various heating purposes in a ship, steam generated by an exhuast gas economizer can be saved by a corresponding amount, and can be fed to a turbine-generator. Thereby electric power generated by the turbine-generator can be increased 10-15%.

2. Since the final temperature of fresh coolant water can be high, the amount of the coolant water can be reduced, and hence the capacity of a coolant water pump and electric power necessitated therefore can be decreased.

3. By carrying out water jacket cooling with fresh water at a high temperature, the temperature of the exhuast gas is raised, and in this aspect also, electric power generated by a turbine-generator can be increased by 15-20%.

4. As the connecting line between the air cooler and water jacket can be realized by pipework within the engine, its installation in a ship can be simplified.

5. Installation in the case of a scoop cooling system, or a concentrated fresh water cooling system can be achieved advantageously and easily.

6. A standby line normally required when the main engine is stopped, or when waste heat utilization is interrupted, can be realised in a very simple manner.

7. Since a scavenged air temperature can be maintained relatively constant, the system provides for the use of poor quality fuel under low load conditions and for maintaining the same exhaust gas temperature in winter.

8. A salt separation phenomenon in the air cooler is eliminated.

## Claims

1. A cooling system specifically for a marine internal combustion engine, comprising an air cooler (30) which is divided into a high temperature section (3) and a low temperature section (4), each with respective coolant water inlet and outlet ports, and each being designed for fresh water cooling, and in which the coolant water outlet port of said low temperature section (4) of the air cooler is connected to the coolant water inlet port of a water jacket (5) of the engine, and the coolant water inlet port of said high temperature section (3) of said air cooler is connected to a coolant water outlet port of said water jacket ; said system further comprising a fresh water cooler (8) for cooling said coolant water by heat exchange with sea water ; a pump (7) for circulating said coolant water ; and a water tank (6) for storing said coolant water, characterised in that said water tank (6) and said water cooler (8) are so connected that said fresh water can pass from said water tank (6) to said water cooler (8), and in that the coolant water outlet port of said high temperature section (3) of said air cooler (30) is connected to an inlet to said water tank whereby, in operation of the system, said coolant water is circulated by said pump, from said water tank through said fresh water cooler (8) for initial cooling, then to said low temperature section (4), said water jacket (5), and said high temperature section (3), in that order, so that they are cooled in series by the coolant water without further cooling of said coolant water, whereby the coolant water is returned to said water tank at a sufficiently high temperature for heat utilization, and in that heat utilization means are associated with the water tank (6).

2. A cooling system according to Claim 1, characterised in that the pump (7) is included in the delivery line (18) between said water tank and water cooler, in that said heat utilization means comprise a further pump (9) provided in a further outlet from said water tank for circulating said coolant water at high temperature from the latter for heat utilization in appropriate equipment, and in that, after heat utilization, this coolant water is returned to said water tank for mixture with incoming coolant water from said high temperature section (3) of said air cooler (30).

3. A cooling system according to Claim 1 or 2, characterised in that there is provided a by-pass (17) of coolant water for short-circuiting the low temperature section (4) of said air cooler (30), and said water cooler (8), and in that a control valve (13) is provided in said by-pass for controlling the temperature of the coolant water at the outlet port of said water jacket (5) constant.

4. A cooling system according to Claim 1, 2 or 3, characterised in that a control valve (12) is provided which connects a by-pass (16) for coolant water from said delivery line (18) with the coolant water line (15) on the inlet side of said low temperature section (4) of said air cooler, said by-pass short circuiting said water cooler (8), and said control valve serving to regulate the inlet temperature of said coolant water to said low temperature section.

5. An internal combustion engine having a cooling system according to any preceding claim associated therewith, characterised in that the connecting line between the air cooler and the water jacket of the engine is incorporated within the latter.

EP 0 063 941 B2

## Ansprüche

1. Kühlsystem, insbesondere für eine Marine-Brennkraftmaschine, mit einem Luftkühler (30), der in einen Hochtemperaturabschnitt (3) und einen Niedertemperaturabschnitt (4) unterteilt ist, die jeweils Kühlwassereinlässe und -auslässe aufweisen und für Frischwasserkühlung ausgelegt sind, wobei der Kühlwasserauslaß des Niedertemperaturabschnittes (4) des Luftkühlers an den Kühlwassereinlaß des Wassermantels (5) der Maschine angeschlossen ist, und wobei der Kühlwassereinlaß des Hochtemperaturabschnittes (3) des Luftkühlers an einen Kühlwasserauslaß des Wassermantels angeschlossen ist, wobei das System ferner einen Frischwasserkühler (8) zum Kühlen des Kühlwassers durch Wärmeaustausch mit Seewasser aufweist ; mit einer Pumpe (7) zum Umwälzen des Kühlwassers, und mit einem Wasserbehälter (6) zum Speichern des Kühlwassers, dadurch gekennzeichnet, daß der Wasserbehälter (6) und der Wasserkühler (8) derart zusammengeschaltet sind, daß Frischwasser aus dem Wasserbehälter (6) in den Wasserkühler (8) überströmen kann, daß der Kühlwasserauslaß des Hochtemperaturabschnittes (3) des Luftkühlers (30) an einen Einlaß zum Wasserbehälter angeschlossen ist, wobei bei Betrieb des Systemes Kühlwasser durch die Pumpe umgewälzt wird, und zwar aus dem Wasserbehälter durch den Frischwasserkühler (8) für die anfängliche Kühlung, sodann zum Niedertemperaturabschnitt (4), zum Wassermantel (5) und zum Hochtemperaturabschnitt (3) in einer solchen Reihenfolge, daß diese nacheinander durch das Kühlwasser ohne weitere Kühlung des Kühlwassers gekühlt werden, wobei das Kühlwasser zum Wasserbehälter bei genügend hoher Temperatur zur Wärmeausnutzung zurückgeführt wird, und daß dem Wasserbehälter (6) Wärmeausnutzungsmittel zugeordnet sind.

2. Kühlsystem nach Anspruch 1, dadurch gekennzeichnet, daß die Pumpe (7) in der Zufuhrleitung (18) zwischen dem Wasserbehälter und dem Wasserkühler angeordnet ist, daß die Wärmeausnutzungsmittel eine weitere Pumpe (9) umfassen, die in einem weiteren Auslaß aus dem Wasserbehälter vorgesehen sind, um das Kühlwasser bei hoher Temperatur von dem letztgenannten zwecks Wärmeausnutzung in einer geeigneten Einrichtung umzuwälzen, und daß dieses Kühlwasser nach der Wärmeausnutzung zwecks Durchmischens mit eintretendem Kühlwasser aus dem Hochtemperaturabschnitt (3) des Luftkühlers (30) wieder zum Wasserbehälter zurückgeführt wird.

3. Kühlsystem nach Anspruch 1 oder 2, dadurch gekennzeichnet, daß ein By-pass (17) des Kühlwassers vorgesehen ist, um den Niedertemperaturabschnitt (4) des Luftkühlers (30) und des Wasserkühlers (8) kurzzuschließen, und daß ein Regelventil (13) im By-pass vorgesehen ist, um die Temperatur des Kühlwassers am Auslaß des Wassermantels (5) auf einen konstanten Wert zu regeln.

4. Kühlsystem nach Anspruch 1, 2, oder 3, dadurch gekennzeichnet, daß ein Regelventil (12) vorgesehen ist, das einen By-pass (16) für Kühlwasser aus der Zufuhrleitung (18) mit der Kühlwasserleitung (15) auf der Einlaßseite des Niedertemperaturabschnittes (4) des Luftkühlers verbindet, daß der By-pass den Wasserkühler (8) kurzschließt, und daß das Regelventil dazu dient, die Einlaßtemperatur des Kühlwassers zum Niedertemperaturabschnitt zu regeln.

5. Brennkraftmaschine mit einem Kühlsystem gemäß einem der vorausgegangenen Ansprüche und verbunden hiermit, dadurch gekennzeichnet, daß die Verbindungsleitung zwischen dem Luftkühler und dem Wassermantel der Maschine in die letztgenannte einbezogen ist.

## Revendications

1. Système de refroidissement, spécifiquement pour un moteur marin à combustion interne, comportant un refroidisseur d'air (30) qui est divisé en un étage à haute température (3) et un étage à basse température (4), dont chacun possède des orifices respectifs d'entrée et de sortie pour de l'eau de refroidissement et dont chacun est agencé pour un refroidissement par de l'eau douce, et dans lequel l'orifice de sortie d'eau de refroidissement à l'étage à basse température (4) du refroidisseur d'air est raccordé à l'orifice d'entrée d'eau de refroidissement d'une chemise d'eau (5) du moteur, et dans lequel l'orifice d'entrée d'eau de refroidissement de l'étage à haute température (3) du refroidisseur d'air est raccordé à un orifice de sortie d'eau de refroidissement de ladite chemise d'eau ; ledit système comportant en outre un refroidisseur d'eau douce (8) pour refroidir ladite eau de refroidissement par échange de chaleur avec de l'eau de mer ; une pompe (7) pour faire circuler ladite eau de refroidissement ; et un réservoir d'eau (6) pour stocker ladite eau de refroidissement, caractérisé en ce que ledit réservoir d'eau (6) et ledit refroidisseur d'eau (8) sont raccordés de façon que l'eau douce puisse passer du réservoir d'eau (6) au refroidisseur d'eau (8), et en ce que l'orifice de sortie d'eau de refroidissement de l'étage à haute température (3) du refroidisseur d'air (30) est raccordé à une entrée dudit réservoir d'eau, de sorte que, pendant le fonctionnement du système, ladite pompe fait circuler l'eau de refroidissement du réservoir d'eau à travers le refroidisseur d'eau douce (8) pour la refroidir initialement, puis vers l'étage à basse température (4), la chemise d'eau (5) et l'étage à haute température (3), dans cet ordre, si bien que ceux-ci sont refroidis en série par l'eau de refroidissement sans autre refroidissement de cette eau, laquelle revient audit réservoir d'eau à une température suffisamment haute pour une utilisation de chaleur, et en ce que des moyens d'utilisation de chaleur sont associés au réservoir d'eau (6).

2. Système de refroidissement selon la revendication 1, caractérisé en ce que la pompe (7) est montée sur la conduite de distribution (18) entre le réservoir d'eau et le refroidisseur d'eau, en ce que lesdits moyens d'utilisation de chaleur comportent une autre pompe (9) branchée à une sortie supplémentaire dudit réservoir d'eau pour faire circuler l'eau de refroidissement à haute température à partir du réservoir afin d'utiliser sa chaleur dans un équipement approprié, et en ce qu'après utilisation de sa chaleur, cette eau de refroidissement est renvoyée audit réservoir pour être mélangée à l'eau de refroidissement arrivant de l'étage à haute température (3) du refroidisseur d'air (30).

3. Système de refroidissement selon la revendication 1 ou 2, caractérisé en ce qu'il est prévu un conduit de dérivation (17) de l'eau de refroidissement pour court-circuiter l'étage à basse température (4) dudit refroidisseur d'air (30) et ledit refroidisseur d'eau (8), et en ce qu'il est prévu une vanne de commande (13) dans ledit conduit de dérivation, pour maintenir constante la température de l'eau de refroidissement à l'orifice de sortie de ladite chemise d'eau (5).

4. Système de refroidissement selon la revendication 1, 2 ou 3, caractérisé en ce qu'il est prévu une vanne de commande (12) pour mettre en communication une conduite de dérivation (16) d'eau de refroidissement, issue de ladite conduite de distribution (18), avec le circuit d'eau de refroidissement (15) du côté d'entrée de l'étage à basse température (4) du refroidisseur d'air, ladite conduite de dérivation court-circuitant le refroidisseur d'eau (8), et ladite vanne de commande servant à régler la température d'entrée de l'eau de refroidissement dans ledit étage à basse température.

5. Moteur à combustion interne équipé d'un système de refroidissement selon l'une quelconque des revendications précédentes, caractérisé en ce que le conduit raccordant le refroidisseur d'air à la chemise d'eau du moteur est incorporé dans ce dernier.

FIG.1

FIG.2

FIG.3